# EUROPÄISCHE PATENTSCHRIFT

(11) **EP 2 764 280 B1**
(45) Veröffentlichungstag und Bekanntmachung des Hinweises auf die Patenterteilung: **01.05.2019**
(21) Anmeldenummer: 12762216.5
(22) Anmeldetag: 14.09.2012
(51) Int. Cl.: F16H 47/04, B60K 6/445, F16H 37/08, F16H 37/10

(54) **LEISTUNGSVERZWEIGUNGSGETRIEBE**
TORQUE-SPLITTING TRANSMISSION
TRANSMISSION À DÉRIVATION DE PUISSANCE

(30) Priorität: 06.10.2011 DE 102011115002
(43) Veröffentlichungstag der Anmeldung: 13.08.2014
(73) Patentinhaber: Liebherr-Components Biberach GmbH, 88400 Biberach an der Riß (DE)
(72) Erfinder: SCHINDLER, Viktor, 88524 Uttenweiler (DE); CHRIST, Clemens, 88400 Biberach (DE)
(74) Vertreter: Thoma, Michael
(86) Internationale Anmeldenummer: PCT/EP2012/003859
(87) Internationale Veröffentlichungsnummer: WO 2013/050103

(56) Entgegenhaltungen:
- WO-A1-2008/128865
- WO-A1-2011/147397
- DE-A1-102006 038 068

## Beschreibung

Die vorliegende Erfindung betrifft ein Leistungsverzweigungsgetriebe, insbesondere für einen Fahrantrieb, mit zumindest einer Antriebswelle und zumindest einer Abtriebswelle, zwischen denen ein mechanischer erster Zweig und ein hydraulischer oder elektrischer zweiter Zweig vorgesehen sind, die zumindest teilweise durch eine Planetengetriebeanordnung miteinander verbindbar sind, wobei der zweite Zweig mehrere Energiewandler umfasst.

Bei mobilen Arbeitsmaschinen mit hohen Anforderungen an die Zugkraft beim Anfahren und häufiger Fahrtrichtungsumkehr, wie dies insbesondere bei Radladern und Laderaupen, aber auch Planierraupen oder ähnlichen Materialumschlagsfahrzeugen der Fall ist, werden oftmals rein hydrostatische Fahrantriebe verwendet, um die für mechanisch angetriebene Geräte mit Wandler typischen Nachteile zu vermeiden, so insbesondere die hohen Verbrauchsnachteile beim Anfahren unter Last und die nicht völlig zugkraftunterbrechungsfreien Schaltstufenwechsel. Hydrostatische Antriebe erlauben eine stufenlose Geschwindigkeitsänderung, die z.B. für Fahrzeuge mit begrenzten Fahrgeschwindigkeiten wie Radlader und Laderaupen oder Planierraupen über den kompletten Geschwindigkeitsbereich möglich ist. Allerdings haben derartige rein hydrostatische Antriebe im Vergleich zu mechanischen Antrieben bei höheren Fahrgeschwindigkeiten einen deutlich höheren Verbrauch, da die Einheiten bei hohen Drehzahlen hohe Verluste verursachen.

Um sozusagen die Vorteile beider Getriebe- bzw. Antriebssysteme zu vereinen, wurden bereits sog. Leistungsverzweigungsgetriebe vorgeschlagen, die eine Kraftübertragung von der eingangsseitigen Antriebswelle auf die ausgangsseitige Abtriebswelle wahlweise durch einen mechanischen ersten Zweig und einen hydrostatischen zweiten Zweig vorsehen, wobei je nach Getriebeausbildung durch Schaltelemente die Leistungsübertragung von rein mechanisch auf rein hydrostatisch und umgekehrt bzw. der Anteil der hydrostatischen und der Anteil der mechanischen Leistungsübertragung variiert werden kann. Bisweilen wird hierbei ein Planetengetriebe verwendet, über das die beiden Leistungszweige miteinander aufsummiert werden können, indem der mechanische Zweig durch das Planetengetriebe hindurchführt und zumindest ein Hydrostat des hydrostatischen Zweigs an das Planetengetriebe angekuppelt ist.

Ein Problem bei solchen leistungsverzweigten Getrieben bringt jedoch die Drehrichtung des Antriebsmotors, der oftmals ein Dieselmotor ist, mit sich. Während bei rein hydrostatischen Antrieben lediglich die Pumpe durch die Null-Grad-Stellung hindurch geschwenkt wird und hierdurch der Volumenstrom bei gleicher Eingangsdrehrichtung umgekehrt wird, wird dies im mechanischen Zweig zur komplexen Aufgabe, da die Drehzahl des Antriebsmotors im mechanischen Zweig bzw. Strang nicht ohne weiteres einfach umkehrbar ist, zumindest nicht ohne Zugkraftunterbrechung bzw. mit harmonischem Null-Durchgang der Zugkraft.

Um die Richtungsumkehr bei solchen leistungsverzweigten Getrieben zu erreichen und die genannte Problematik der Zugkraftunterbrechung im mechanischen Strang sozusagen zu umgehen, wurde bereits vorgeschlagen, die "falsche" Drehrichtung des mechanischen Zweigs durch eine größere Drehzahl in der "richtigen" Drehrichtung des hydrostatischen Kreises zu überlagern. Hierdurch werden allerdings im Getriebe Blindleistungen übertragen, was den Verbrauch steigert und größere Hydraulikeinheiten bedingt. Bei Traktoren beispielsweise wird dieser Ansatz durchaus erfolgreich eingesetzt, was allerdings hauptsächlich an der Randbedingung liegt, dass Traktoren vorrangig in Vorwärtsrichtung betrieben werden und insofern die Fahrzyklusanteile mit Rückwärtsfahrt, bei der die genannte Drehrichtung kompensiert werden muss und Blindleistungen anfallen, relativ klein ist. Bei mobilen Arbeitsmaschinen wie beispielsweise Radladern oder Laderaupen, die hohe Rückwärtsfahranteile bzw. ein einigermaßen ausgewogenes Verhältnis von Vorwärtsfahren und Rückwärtsfahren aufweisen, fällt die Bilanz solcher Getriebesysteme deutlich schlechter aus, da hier über einen durchaus beachtlichen Fahrzyklusanteil, in dem rückwärts gefahren wird, die genannte Blindleistung anfällt.

Alternativ wurde deshalb auch bereits vorgeschlagen, zwischen den Antriebsmotor bzw. die Antriebswelle und das Planetengetriebe des Leistungsverzweigungsgetriebes ein Umkehr- bzw. Reversiergetriebe vorzusehen, um die fest vorgegebene Drehrichtung des Antriebsmotors für die Einleitung in den mechanischen Zweig des Leistungsverzweigungsgetriebes umkehren zu können. Derartige Leistungsverzweigungsgetriebe mit einem dem mechanischen Zweig vorgeschalteten Reversiergetriebe zeigen beispielsweise die Schriften DE 10 2008 001 613 A1 und DE 10 2008 040 449. Dabei sind die Hydrostaten des hydraulischen Zweigs dem Planetengetriebe bzw. einem diesem nachgeordneten Schaltgetriebe zugeordnet, um die hydrostatische Leistung auf die mechanische Leistung aufsummieren zu können. Ein Nachteil dieser vorbekannten Lösungen speziell beim Einsatz in mobilen Arbeitsmaschinen mit hohen Rückwärtsfahranteilen wie Radladern besteht jedoch darin, dass systembedingt die Pumpendrehzahl bei gegen Null gehenden Geschwindigkeiten ihren Maximalwert erreicht und diese beim Reversieren mit der Wendeschaltgruppe ebenfalls in ihrer Drehrichtung geändert wird, wodurch die Drehzahländerung der Pumpe betragsmäßig etwa der doppelten Maximaldrehzahl entspricht. Wenn der Reversiervorgang mit der an sich notwendigen Geschwindigkeit von beispielsweise wenigen Zehntelsekunden erfolgt, entsteht hierdurch eine grenzwertig hohe Beschleunigung der Pumpe, die hierdurch an oder sogar über ihre Belastungsgrenze beansprucht wird, so dass es zu vorzeitigem Verschleiß oder gar Totalausfällen kommt. Wird andererseits hierauf Rücksicht genommen und der Reversiervorgang langsamer durchgeführt, so wird der Fahrer ein solches langsames Reversieren mit einer gefühlten "Wartezeit" bei Geschwindigkeit Null als Nachteil empfinden, insbesondere wenn der Fahrer von bisher hydrostatisch betriebenen Maschinen ein kontinuierliches Reversieren durch Geschwindigkeit Null ohne jedes Verharren im Stillstand gewohnt ist.

Um diese Problematik des Reversierens zu lindern, gleichwohl jedoch aus den genannten Gründen eine Leistungsverzweigung vorsehen zu können, schlägt die Schrift EP 2 280 192 A1 ein Leistungsverzweigungsgetriebe vor, bei dem die Hydraulikpumpe vor der Umkehrschaltstufe und damit unbeeinträchtigt von der Drehrichtungsumkehr an die Antriebswelle bzw. den Antriebsmotor angebunden ist, so dass die Pumpe des hydrostatischen Zweigs stets in derselben Richtung dreht, und nur der hydrostatische Motor an das Planetengetriebe angekoppelt ist. Dabei kann durch Wegschalten des mechanischen Zweigs in einem Fahrbereich niedriger Geschwindigkeit die Leistung allein hydrostatisch übertragen werden, so dass hier das übliche Reversieren sanft und doch rasch durch entsprechendes Schwenken der Pumpe durch Null realisiert werden kann. Nachteilig sind hierbei jedoch die zusätzlich erforderliche, parallel zum Planetengetriebe angeordnete Stirnradkette zur Leistungsübertragung vom hydrostatischen Motor auf den Abtrieb und die Regelung der leistungsverzweigten zweiten Fahrstufe. Um in der zweiten Fahrstufe einen ausreichend großen Drehzahlbereich abzudecken, sind abtriebsseitig mit dem Planetengetriebe mehrere Schaltstufen mit entsprechenden Kupplungen vorgesehen, um durch Schalten der Kupplungen verschiedene Drehzahlverhältnisse einstellen zu können. Durch Verstellen der Hydraulikeinheiten wird lediglich eine Feinveränderung der Übersetzungsverhältnisse in den einzelnen Fahrbereichsstufen erzielt, wenn leistungsverzweigt gefahren wird. Hierdurch wird das Getriebe relativ komplex und aufwändig und durch die vorzusehenden Kupplungen und Schaltstufen wartungsintensiv und verschleißanfällig. Zudem entstehen durch die benötigten Kupplungen Leerlaufverluste, die den Wirkungsgrad des Leistungsverzweigungsgetriebes beeinträchtigen. Ferner kommt es beim Umschalten vom rein hydrostatischen Betrieb in den leistungsverzweigten Betrieb zu einem Einbruch bzw. zumindest einer Verzögerung der Zugkraftübertragung. Am Ende des rein hydrostatischen Fahrbereichs steht die Pumpe üblicherweise auf maximalem Schwenkwinkel und der Motor auf minimalem oder zumindest verringertem Schwenkwinkel, um so die rein hydrostatisch maximal mögliche Abtriebsdrehzahl zu realisieren. Dabei ist der Hydraulikmotor mit dem Hohlrad des Planetengetriebes verbunden, welches dann zwangsläufig auch auf relativ hoher Drehzahl ohne Momentenübertragung leer mitläuft. Zu Beginn des leistungsverzweigten Fahrbereichs wird die Drehzahl dadurch erhöht, dass auf den konstanten Drehzahlanteil des mechanischen Zweigs, der vom Dieselmotor vorgegeben ist, nunmehr über das Hohlrad eine von Null beginnende zunehmende Drehzahl des hydraulischen Zweigs addiert wird. Dazu muß das Hohlrad und damit der Hydraulikmotor unmittelbar nach dem Umschalten Drehzahl Null oder zumindest eine geringe Drehzahl haben, was dadurch realisiert wird, dass in diesem Moment die Pumpe auf kleinem oder Null Schwenkwinkel und der Motor auf großem oder maximalem Schwenkwinkel steht. Das hat zur Folge, dass während des Schaltvorgangs in kürzester Zeit die Pumpe zurück und der Motor ausgeschwenkt werden müssen. In dieser Zeit liegt der Zustand des oben genannten Einbruchs der Leistungsübertragung vor.

Weitere Leistungsverzweigungsgetriebe sind aus den Schriften DE 10 2006 038 068 A1, WO 2008/128865 A1 und WO 2011/147397 A1 bekannt. Dabei zeigt beispielsweise die Schrift WO 2008/128865 A1 ein Leistungsverzweigungsgetriebe nach dem Oberbegriff des Anspruchs 1.

Der vorliegenden Erfindung liegt die Aufgabe zugrunde, ein verbessertes Leistungsverzweigungsgetriebe der eingangs genannten Art zu schaffen, das Nachteile des Standes der Technik vermeidet und Letzteren in vorteilhafter Weise weiterbildet. Insbesondere soll bei einfachem Getriebeaufbau eine rasche, kontinuierliche und verschleißarme Reversierbarkeit erreicht werden, ohne den Wirkungsgrad des Getriebes zu beeinträchtigen und den Verstellbereich für das Übersetzungsverhältnis zu beschneiden. Zudem soll eine unterbrechungsfreie Zugkraftübertragung auch beim Umschalten zwischen den verschiedenen Fahrbereichen erreicht werden, so dass z.B. während des Umschaltens Hydrostaten nicht in ihrem Schwenkwinkel verstellt werden müssen.

Erfindungsgemäß wird diese Aufgabe durch ein Leistungsverzweigungsgetriebe nach Anspruch 1 gelöst. Bevorzugte Ausgestaltungen der Erfindung sind Gegenstand der abhängigen Ansprüche.

Es wird vorgeschlagen, drei oder mehr miteinander hydraulisch oder elektrisch verbundene rotatorische Energiewandler vorzusehen und dabei zumindest einen Energiewandler mit der zumindest einen Antriebswelle koppelbar und zumindest zwei Energiewandler mit der Planetengetriebeanordnung und/oder der Abtriebswelle koppelbar anzuordnen, und dabei nicht alle Energiewandler jeweils fest als Motor oder Druck- bzw. Stromgenerator vorzusehen, sondern zumindest einen der Energiewandler je nach Fahrbereich wahlweise als Motor oder Pumpe/Generator zu verwenden. Erfindungsgemäß ist die zumindest eine Antriebswelle mit einem ersten Energiewandler verbunden und einem ersten Anschlusselement der Planetengetriebeanordnung verbindbar, während die zumindest eine Abtriebswelle mit einem zweiten Anschlusselement der Planetengetriebeanordnung verbunden ist und die zweiten und dritten Energiewandler mit einem Anschlusselement der Planetengetriebeanordnung verbunden sind. Durch die Verwendung der zumindest drei Energiewandler und deren unterschiedliche Anbindung einerseits an die Antriebswelle und andererseits an die damit verbundene Planetengetriebeanordnung kann je nach Bedarf leistungsverzweigt oder auch nur über den hydraulischen/elektrischen Zweig oder den mechanischen Zweig gefahren werden, wobei die Energiewandler in verschiedenen Kombinationen miteinander betrieben werden können, wodurch sich eine große Fahrstufenvariabilität ergibt. Durch die zumindest zwei an die Planetengetriebeanordnung unmittelbar oder mittelbar angekoppelten oder, beispielsweise über eine Kupplungs- oder Schaltbaugruppe, ankoppelbaren Energiewandler kann insbesondere bei leistungsverzweigtem Fahren eine große Spreizung auch ohne vor- oder nachgeschaltete Schaltstufengetriebegruppen bei gleichzeitig stufenloser Verstellbarkeit des Übersetzungsverhältnisses erzielt werden. Andererseits kann durch den zumindest einen mit der Antriebswelle bzw. dem vorgeschalteten Antriebsmotor unmittelbar oder mittelbar verbundenen Energiewandler auch eine rein hydraulische bzw. elektrische Fahrstufe realisiert werden, die insbesondere ein einfaches Reversieren des Fahrantriebs mit kurzem, kontinuierlichem und doch sanftem Nulldurchgang erzielen kann. Gleichzeitig kann der genannte erste Energiewandler, der mit der Antriebswelle verknüpft ist, vorteilhafterweise durch variable Betreibbarkeit sowohl als Motor als auch als Pumpe/Generator die Variabilität der Fahrstufen vergrößern.

In Weiterbildung der Erfindung ist dabei vorteilhafterweise eine Steuervorrichtung zur Steuerung der Energiewandler vorgesehen und derart ausgebildet, dass je nach gewünschter Abtriebsgeschwindigkeit und/oder gewünschtem Abtriebsmoment ein jeweils anderer Energiewandler als Druck- oder Stromgenerator betreibbar ist. Insbesondere kann hierbei vorgesehen sein, dass der erste Energiewandler und zumindest einer der beiden anderen Energiewandler je nach gewünschter Abtriebsgeschwindigkeit wechselweise als Motor oder als Druck- oder Stromgenerator betreibbar sind. Durch die steuerbare Umschaltbarkeit der Energiewandler zwischen Generatorbetrieb und Motorbetrieb kann die Variabilität der Fahrstufen gezielt weiter erhöht werden. Im Falle von Hydrostaten kann die genannte Steuervorrichtung den Schwenkwinkel verstellen. Im Falle von Elektromaschinen kann beispielsweise, im Falle von Wechselstrommaschinen, durch einen Frequenzumrichter die Frequenz, oder, im Falle von Gleichstrommaschinen, durch einen Spannungsregler die Spannung verstellt werden.

Die Anbindung der genannten zweiten und dritten Energiewandler kann grundsätzlich an verschiedenen Stellen der Planetengetriebeanordnung bis hin zur Abtriebswelle bzw. daran angebundenen Baugruppen erfolgen. Vorteilhafterweise jedoch sind beide zweiten und dritten Energiewandler an die Planetengetriebeanordnung angebunden, um jeden der Energiewandler zur Drehzahlvariation gegenüber dem mechanischen Zweig bei leistungsverzweigtem Betrieb nutzen zu können. Ein direkt an die Abtriebswelle angebundener Energiewandler könnte nur zur Variation des Drehmoments genutzt werden, während nur der verbleibende, an das Planetengetriebe angebundene Energiewandler zur Drehzahlvariation genutzt werden könnte. Die Planetengetriebeanordnung umfasst dementsprechend vorteilhafterweise zumindest vier Anschlüsse bzw. Anschlusselemente, wobei an das genannte erste und zweite Anschlusselement die Antriebswelle und die Abtriebswelle angebunden sind, während an ein drittes und viertes Anschlusselement der zweite Energiewandler bzw. der dritte Energiewandler angebunden sind.

Die Anbindung der jeweiligen Bauelemente an die genannten Anschlusselemente kann hierbei grundsätzlich unmittelbar vorgesehen sein, beispielsweise dergestalt, dass das jeweilige Element direkt und starr, z.B. über eine Welle, mit dem entsprechenden Anschlusselement verbunden ist. Alternativ kann jedoch auch zumindest eines oder alle der genannten Getriebeelemente, d.h. Antriebswelle, Abtriebswelle und Energiewandler, mittelbar an das jeweilige Anschlusselement angebunden sein, beispielsweise unter Zwischenschaltung eines weiteren Getriebeelements oder einer Getriebestufe, beispielsweise in Form eines Stirnradpaares, und/oder unter Zwischenschaltung einer Kupplung, so dass das entsprechende Bauelement von dem jeweiligen Anschlusselement abtrennbar und anschließbar ist. Jeder der Energiewandler kann also mit dem jeweiligen Getriebeelement bzw. Anschlusselement unmittelbar oder mittelbar verbunden oder verbindbar sein. Dies gilt auch für die anderen Getriebeelemente, die mit zumindest jeweils einem weiteren Getriebeelement unmittelbar oder mittelbar verbunden oder verbindbar sein können.

In vorteilhafter Weiterbildung der Erfindung können die Energiewandler ohne Zwischenschaltung von Kupplungen an die Antriebswelle bzw. die Planetengetriebeanordnung angebunden sein, so dass sich die Energiewandler immer mit der Antriebswelle bzw. dem entsprechenden Planetengetriebeelement mitdrehen bzw. bei deren Stillstand ebenfalls stillstehen. Durch eine solche kupplungsfreie Anbindung der Energiewandler können Verlustleistungen im Bereich solcher Kupplungen vermieden werden. Vorteilhafterweise kann das Getriebe auch frei von Schaltgetrieben zur Geschwindigkeitsveränderung ausgebildet sein. In Weiterbildung der Erfindung kann das Leistungsverzweigungsgetriebe Drehzahländerungen alleine durch Verstellen der Energiewandler und ggf. Zu- und Abschalten des mechanischen Zweigs und ggf. einem Blockieren einzelner Elemente der Planetengetriebeanordnung erzielen.

In Weiterbildung der Erfindung ist zumindest eines der Anschlusselemente, an die die zweiten und/oder dritten Energiewandler unmittelbar oder mittelbar angeschlossen oder anschließbar sind, durch eine Bremse arretierbar, wobei die Bremse unmittelbar dem Anschlusselement oder einem damit drehfest verbundenen Element zugeordnet sein kann. Mittels einer solchen Bremse kann eine Leistungsübertragung über die Planetengetriebeanordnung in effizienter Weise auch bei abgeschaltetem bzw. auf Null gestelltem Energiewandler erfolgen. Alternativ wäre es aber auch möglich, zur Einstellung des entsprechenden Fahrbereichs das entsprechende Anschlusselement und das damit verbundene Getriebeelement der Planetengetriebeanordnung durch den damit verbindbaren Energiewandler stillzusetzen, beispielsweise dadurch, dass der Energiewandler im Stillstand ein ausreichendes Drehmoment aufbringt, welches den auf das Anschlusselement wirkenden Kräften bzw. Drehmomenten entgegenwirkt. Dies könnte durch entsprechende Steuerung des zugeordneten Energiewandlers bewirkt werden. Alternativ oder zusätzlich kann auch eine Freilaufkupplung vorgesehen sein, die eine Bewegung des jeweiligen Elements in nur eine Richtung erlaubt, in entgegengesetzter Richtung hingegen blockiert. Bevorzugt ist jedoch die Verwendung einer Bremse, da hierdurch im zweiten Zweig Leistungsverluste reduziert und auch ein kleinerer Energiewandler verwendet werden kann.

Insbesondere kann eine Bremse dem vorgenannten vierten Anschlusselement zugeordnet sein, mit dem der vorgenannte dritte Energiewandler unmittelbar oder mittelbar verbunden oder verbindbar ist. Alternativ oder zusätzlich kann auch dem dritten Anschlusselement der Planetengetriebeanordnung, das mit dem zweiten Energiewandler unmittelbar oder mittelbar verbunden oder verbindbar ist, eine Bremse zugeordnet sein.

In Weiterbildung der Erfindung kann auch ein vierter Energiewandler, ggf. auch ein fünfter und noch weitere Energiewandler vorgesehen sein. Ein solcher vierter Energiewandler kann vorteilhafterweise mit der zumindest einen Antriebswelle verbunden werden, beispielsweise um im Sinne einer Boost-Funktion eine zusätzliche Leistungsaufschaltung vorsehen zu können, wie dies beispielsweise als Anfahrhilfe oder bei auftretenden Leistungsspitzen vorteilhaft ist. Ein solcher vierter Energiewandler kann je nach Ausbildung der zur Verfügung stehenden Energiequellen auch anders als die übrigen Energiewandler ausgebildet sein. Ist beispielsweise ein Hybridantrieb vorgesehen, kann besagter vierter Energiewandler als elektrischer Motor/Generator ausgebildet sein, auch wenn die übrigen Energiewandler Hydrostaten sind. Hierbei kann auch ein elektrischer/hydraulischer Energiespeicher vorgesehen sein, mit dem der genannte vierte Energiewandler verbunden werden kann.

Die vorgenannte Steuervorrichtung kann grundsätzlich verschieden ausgebildet sein bzw. das Getriebe in verschiedener Art und Weise steuern. Einerseits kann zumindest einer der Energiewandler, vorzugsweise zumindest zwei und insbesondere alle der Energiewandler verstellbar ausgebildet sein, wobei die Steuervorrichtung den jeweiligen Energiewandler einzeln oder gruppenweise mit einzelnen oder allen der anderen verstellbaren Energiewandler verstellen kann. Ist der zweite Zweig hydraulisch ausgebildet und sind dementsprechend als Energiewandler Hydrostaten vorgesehen, kann zumindest ein Hydrostat bzw. können die entsprechenden Hydrostaten im Hubvolumen verstellbare Verstelleinheiten sein, deren Hubvolumen vorteilhafterweise stufenlos zwischen Null und einem maximalen Hubvolumen oder zwischen einem maximalen negativen und einem maximalen positiven Hubvolumen verstellbar ist. Insbesondere kann von der Steuervorrichtung der Schwenkwinkel des jeweiligen Hydrostaten verstellt werden. Insbesondere sind die vorstehend beschriebenen Funktionen in einfacher Weise realisierbar, wenn zumindest zwei oder insbesondere alle drei Hydrostaten hydraulisch parallel geschaltet oder schaltbar sind. Ist der zweite Zweig hingegen elektrisch ausgebildet und sind dementsprechend als Energiewandler Elektromaschinen vorgesehen, kann zumindest eine, vorzugsweise mindestens zwei und insbesondere jede der Elektromaschinen als Drehstrommaschinen ausgeführt sein und über rückspeisefähige Wechselrichter mit einem gemeinsamen Gleichspannungszwischenkreis verbunden sein bzw. durch entsprechende Schaltelemente hiermit verbunden werden, so dass z.B. die Drehzahl der jeweiligen Elektromaschine im Motorbetrieb vorzugsweise stufenlos zwischen Null und einer maximalen, positiven oder negativen, Drehzahl über die genannten Wechselrichter verstellbar ist.

In Weiterbildung der Erfindung kann das Getriebe auch zumindest ein Schaltelement aufweisen, das von der Steuervorrichtung schaltbar ist, um den Schaltzustand des Getriebes zu verändern. Derartige Schaltelemente können insbesondere Kupplungen und/oder Bremsen, aber prinzipiell auch andere Schaltelemente wie zuschaltbare Übersetzungsstufen sein, die in ihrem Schaltzustand von der genannten Steuervorrichtung verändert werden können.

Insbesondere kann in Weiterbildung der Erfindung der mechanische erste Zweig des Getriebes von der Antriebswelle durch zumindest eine Kupplung abkuppelbar sein, so dass in einem ersten Fahrbereich die Abtriebswelle ausschließlich vom hydraulischen oder elektrischen zweiten Zweig antreibbar ist. Vorteilhafterweise kann die genannte Kupplung von der Steuervorrichtung angesteuert werden, um koordiniert mit der Ansteuerung der verstellbaren Energiewandler die jeweilige Fahrstufe einstellen zu können. Ist in der genannten Weise der mechanische erste Zweig von der Antriebswelle abgekuppelt, kann die Steuervorrichtung insbesondere vorsehen, dass in dem genannten ersten Fahrbereich im motorischen Betrieb der erste Energiewandler, der an die Antriebswelle angekuppelt ist, als Pumpe bzw. Generator betrieben wird und zumindest einer der zweiten und dritten Energiewandler als Motor betrieben wird.

Die genannte Kupplung zum Abschalten bzw. Zuschalten des mechanischen ersten Zweigs kann in vorteilhafter Weiterbildung der Erfindung von einer Reversierschaltgruppe gebildet werden, mittels derer die Drehrichtung des ersten Anschlusselements der Planetengetriebeanordnung relativ zur Antriebswelle umkehrbar ist. Die genannte Reversierschaltgruppe ist hierbei vorteilhafterweise zwischen der Antriebswelle und der Planetengetriebeanordnung vorgesehen. Das Abkuppeln des ersten Zweigs muss jedoch nicht zwangsweise durch die genannte Reversierschaltgruppe vorgenommen werden. Vielmehr könnte auch eine Kupplung separat von bzw. zusätzlich zu der genannten Reversierschaltgruppe vorgesehen sein, je nachdem, wie die Reversierschaltgruppe ausgebildet ist, um das Abschalten bzw. Zuschalten des ersten Zweigs unabhängig von einer Betätigung der Reversierschaltgruppe durchführen zu können. Vorteilhafterweise jedoch ist die Kupplung zum Ab- und Zuschalten des ersten Zweigs in die genannte Reversierschaltgruppe integriert, die vorteilhafterweise zwei Kupplungseinheiten bzw. eine Doppelkupplungseinheit umfassen kann, um wahlweise eine Vorwärtsstufe oder eine Rückwärtsstufe zuschalten zu können.

Wird das Getriebe leistungsverzweigt, d.h. mit zugeschaltetem ersten Zweig betrieben, kann in einem solchen zweiten Fahrbereich, in dem die Abtriebswelle sowohl vom ersten Zweig als auch vom zweiten Zweig angetrieben wird, die Steuervorrichtung vorteilhafterweise die Energiewandler derart verstellen, dass im motorischen Betrieb der erste Energiewandler, der mit der Antriebswelle verbunden ist, und der zweite Energiewandler, der an die Planetengetriebeanordnung angebunden ist, jeweils wahlweise sowohl als Motor als auch als Druck- bzw. Stromgenerator betreibbar sind, insbesondere derart, dass bei Betrieb des ersten Energiewandlers als Motor der zweite Energiewandler als Pumpe bzw. Generator betrieben wird und umgekehrt bei Betreiben des ersten Energiewandlers als Pumpe bzw. Generator der zweite Energiewandler als Motor betrieben wird. Durch eine solche Betriebsumkehr von erstem und zweitem Energiewandler kann die erreichbare Drehzahlwandlung beträchtlich vergrößert werden.

Insbesondere können in dem genannten zweiten Fahrbereich, in dem leistungsverzweigt mit beiden Zweigen Leistung übertragen wird, durch geschicktes Schalten bzw. Verstellen der Energiewandler verschiedene Unterbereiche eingestellt und ineinander übergehend gefahren werden. Je nach benötigtem Drehmoment bzw. benötigter Drehzahl können die Anteile durch die Leistungsverzweigung so abgestimmt werden, dass entweder sehr hohe Drehmomente bei gleichzeitig kleiner Drehzahl oder sehr kleine Drehmomente bei großen Drehzahlen abgegeben werden können. Dadurch kann beispielsweise ein Radlader oder eine Laderaupe von sehr kleinen bis sehr großen Fahrgeschwindigkeiten stufenlos durchfahren werden.

In vorteilhafter Weiterbildung der Erfindung kann hierbei in einem ersten Unterbereich des genannten zweiten Fahrbereichs im motorischen Betrieb der zweite Energiewandler als Pumpe/Generator betrieben werden, während der dritte Energiewandler als Motor betrieben wird und der erste Energiewandler ebenfalls als Motor betrieben wird. Alternativ oder zusätzlich kann in einem zweiten Unterbereich des genannten zweiten Fahrbereichs im motorischen Betrieb der zweite Energiewandler als Pumpe/Generator betrieben werden, der dritte Energiewandler als Motor betrieben werden, während der erste Energiewandler leer mitdreht, ohne Drehmoment zu übertragen. Alternativ oder zusätzlich kann in einem dritten Unterbereich des genannten zweiten Fahrbereichs im motorischen Betrieb der erste Energiewandler als Pumpe betrieben und der zweite Energiewandler als Motor betrieben werden, während der dritte Energiewandler leer mitdreht, ohne Drehmoment zu übertragen. Mit den genannten Unterbereichen und den entsprechenden Einstellungen der Energiewandler können innerhalb des leistungsverzweigten zweiten Fahrbereichs verschiedene Drehzahlbereiche und/oder Drehmomentbereiche realisiert werden, wobei insbesondere mit dem genannten zweiten Unterbereich eine höhere Drehzahl als mit dem genannten ersten Unterbereich und mit dem genannten dritten Unterbereich wiederum eine höhere Drehzahl als mit dem genannten zweiten Unterbereich erreicht werden kann. Mit dem genannten ersten Unterbereich kann hierbei insbesondere eine Drehzahl erreicht werden, die sich vorzugsweise nahtlos oder überlappend an den ersten Fahrbereich anschließt, indem das Getriebe alleine hydraulisch bzw. elektrisch, d.h. über den zweiten Zweig betrieben wird. Hierdurch lässt sich ein insgesamt sehr großer Drehzahlwandlungsbereich erzielen.

Vorteilhafterweise kann in jedem der genannten Fahrbereiche bzw. Unterbereiche zumindest ein Energiewandler, vorteilhafterweise auch mehrere Energiewandler gleichzeitig verstellt werden, um eine stufenlose Variation des zu erzielenden Drehmoments und/oder der zu erzielenden Drehzahl zu erreichen. Beispielsweise kann in Weiterbildung der Erfindung in dem genannten ersten Unterbereich des zweiten Fahrbereichs der erste Hydrostat zwischen vollem Schwenkwinkel und der Nullstellung verstellt werden. Alternativ oder zusätzlich kann in dem zweiten Unterbereich des leistungsverzweigten Fahrbereichs nacheinander oder zeitgleich der zweite Hydrostat und/oder der dritte Hydrostat zwischen maximalem Schwenkwinkel und reduziertem Schwenkwinkel bzw. Nullstellung verstellt werden. Alternativ oder zusätzlich kann im genannten dritten Unterbereich des leistungsverzweigten Fahrens eine Verstellung des Schwenkwinkels des ersten Hydrostaten und/oder des zweiten Hydrostaten vorgenommen werden.

In Weiterbildung der Erfindung können zumindest zwei der Energiewandler hydraulisch oder elektrisch parallel geschaltet sein, wobei in vorteilhafter Weiterbildung der Erfindung insbesondere alle drei Energiewandler parallel geschaltet zueinander angeordnet sein können, so dass vom ersten Energiewandler her kommender Volumenstrom oder Strom in beide der zweiten und dritten Energiewandler gelangt und umgekehrt. Alternativ oder zusätzlich kann die Parallelschaltung der Energiewandler auch derart ausgebildet sein, dass die von einem beliebigen der Energiewandler abgegebene Energie in Form von Volumenstrom oder Strom auf jeden der übrigen Energiewandler gegeben werden kann. Hierdurch können viele verschiedene Schaltzustände erzielt werden. Insbesondere kann auch durch Abregeln eines Energiewandlers, beispielsweise durch Einstellen der Nullstellung, in der keine Leistungsaufnahme und -abgabe erfolgt, der den parallel geschalteten Energiewandler beaufschlagende Energiestrom in Form von hydraulischem Volumenstrom oder elektrischem Strom größer oder kleiner gemacht werden. Hierdurch lässt sich eine feine und doch insgesamt über einen großen Stellbereich variable Einstellung der Fahrbereiche erzielen.

Die Planetengetriebeanordnung selbst kann grundsätzlich unterschiedlich ausgebildet sein, wobei die Planetengetriebeanordnung vorteilhafterweise mehrstufig ausgebildet ist. Insbesondere kann die Planetengetriebeanordnung als Stufenplanetengetriebe ausgebildet sein, das einen Steg mit mindestens einem Stufenplaneten umfasst, wobei eine erste Sonne in Wirkverbindung mit der ersten Stufe des mindestens einen Stufenplaneten steht, eine zweite Sonne in Wirkverbindung mit der zweiten Stufe des genannten mindestens einen Stufenplaneten steht und ein Hohlrad in Wirkverbindung mit mindestens einer Stufe des mindestens einen Stufenplaneten steht. Hierdurch können in einfacher Weise vier Anschlusselemente für die An- und Abtriebswellen sowie die Energiewandler bereitgestellt werden. Alternativ oder zusätzlich kann jedoch auch eine Planetengetriebeanordnung mit zwei konventionell ausgebildeten Planetenstufen mit jeweils einer Sonne, einem Hohlrad und einem Steg mit mindestens einem Planeten vorgesehen sein, wobei jede Planetenstufe an sich drei Anschlusselemente aufweist. In vorteilhafter Weiterbildung der Erfindung kann ein Anschluss der ersten Planetenstufe mit einem Anschluss der zweiten Planetenstufe gekoppelt und ein weiterer Anschluß festgesetzt sein, so dass das solchermaßen gekoppelte Planetenstufensystem vorteilhafterweise vier Anschlusselemente zum Anschließen der genannten Getriebeelemente besitzt. In vorteilhafter Weise können hierbei die beiden Stege miteinander gekoppelt sein und/oder eines der Hohlräder festgesetzt sein.

Nach einer vorteilhaften Ausführung der Erfindung ist die Antriebswelle mit der ersten Sonne der Planetengetriebeanordnung unmittelbar oder mittelbar verbunden oder verbindbar und die Abtriebswelle ist mit dem Steg oder einem der Stege der Planetengetriebeanordnung unmittelbar oder mittelbar verbunden oder verbindbar. Der zweite Energiewandler ist vorteilhafterweise mit der zweiten Sonne unmittelbar oder mittelbar verbunden oder verbindbar, während der dritte Energiewandler in vorteilhafter Weiterbildung der Erfindung mit dem Hohlrad der Planetengetriebeanordnung bzw. dem nicht festgesetzten zweiten Hohlrad unmittelbar oder mittelbar verbunden sein bzw. werden kann.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Darstellung eines Leistungsverzweigungsgetriebes nach einer vorteilhaften Ausführung der Erfindung, wonach drei Energiewandler in Form von verstellbaren Hydrostaten vorgesehen und der mechanische Zweig durch eine Reversierschaltgruppe in der Drehrichtung relativ zur Antriebswelle umkehrbar ist,
- Fig. 2:: eine schematische Darstellung eines Leistungsverzweigungsgetriebes nach einer vorteilhaften Ausführung der Erfindung, wonach drei Energiewandler in Form von Elektromaschinen mit rückspeisefähigen Wechselrichtern vorgesehen und der mechanische Zweig durch eine Reversierschaltgruppe in der Drehrichtung relativ zur Antriebswelle umkehrbar ist,
- Fig. 3:: eine schematische Darstellung der Leistungsübertragung des Leistungsverzweigungsgetriebes aus den vorhergehenden Figuren bei abgeschaltetem mechanischen ersten Leistungszweig,
- Fig. 4:: eine schematische Darstellung der Leistungsübertragung des Leistungsverzweigungsgetriebes aus den vorhergehenden Figuren bei zugeschaltetem mechanischen ersten Zweig, wobei ein erster Unterbereich des leistungsverzweigten Fahrens dargestellt ist,
- Fig. 5:: eine schematische Darstellung der Leistungsübertragung des Leistungsverzweigungsgetriebes aus den vorhergehenden Figuren bei zugeschaltetem mechanischen ersten Zweig, wobei ein zweiter Unterbereich des leistungsverzweigten Fahrens dargestellt ist,
- Fig. 6:: eine schematische Darstellung der Leistungsübertragung des Leistungsverzweigungsgetriebes aus den vorhergehenden Figuren bei zugeschaltetem mechanischen ersten Zweig, wobei ein dritter Unterbereich des leistungsverzweigten Fahrens dargestellt ist,
- Fig. 7:: eine schematische Darstellung der Planetengetriebeanordnung des Leistungsverzweigungsgetriebes aus den vorhergehenden Figuren nach einer alternativen Ausführungsform, wonach die Planetengetriebeanordnung zwei an sich konventionelle Planetenstufen mit jeweils einer Sonne, einem Steg, zumindest einem Planeten und einem Hohlrad umfasst, wobei die Stege der beiden Planetenstufen zusammengefasst sind, und
- Fig. 8:: eine schematische Darstellung eines Leistungsverzweigungsgetriebes nach einer weiteren vorteilhaften Ausführung der Erfindung, wonach vier Energiewandler in Form von drei Hydrostaten und einer Elektromaschine vorgesehen sind und der mechanische Zweig durch eine Reversierschaltgruppe in der Drehrichtung relativ zur Antriebswelle umkehrbar ist, wobei zusätzlich ein zweiter Antriebsmotor und eine zweite Abtriebswelle vorgesehen sind.

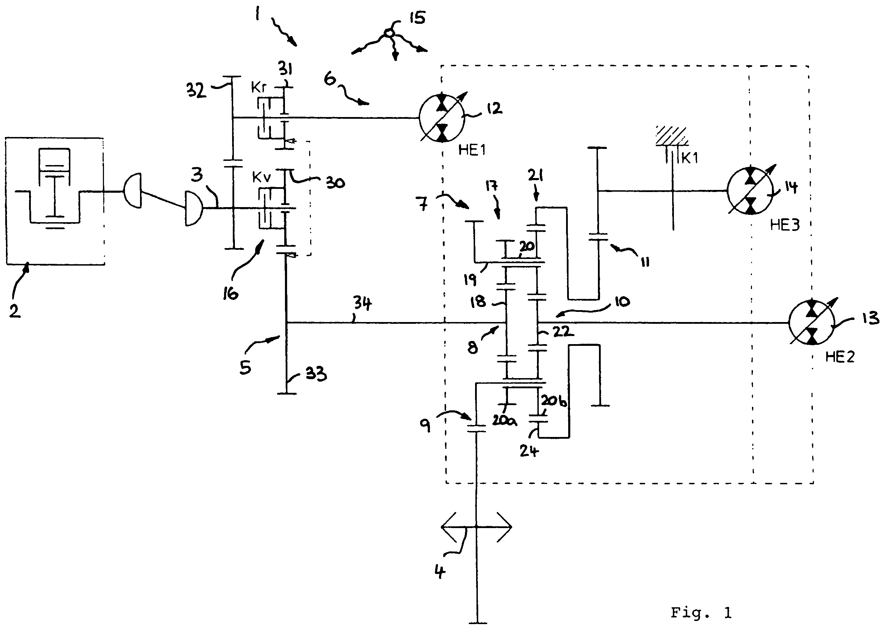

Wie Fig. 1 zeigt, kann das Leistungsverzweigungsgetriebe 1 eine Eingangs- bzw. Antriebswelle 3 aufweisen, die von einem Antriebsmotor, beispielsweise in Form eines Dieselmotors 2 angetrieben werden kann, wobei zwischen Antriebsmotor 2 und Leistungsverzweigungsgetriebe 1 ein Schwingungs- bzw. Torsionsdämpfer oder auch andere zwischengeschaltete Übertragungsglieder vorgesehen sein können.

Zwischen der Antriebswelle 3 und der Abtriebswelle 4 des Leistungsverzweigungsgetriebes 1 sind ein mechanischer erster Zweig 5 und ein hydrostatischer zweiter Zweig 6 vorgesehen, über die im motorischen Betrieb die Leistung der Antriebswelle 3 auf die Abtriebswelle 4 übertragen werden kann, wobei die Aufteilung der Leistungskomponenten auf den mechanischen Zweig und den hydrostatischen Zweig durch entsprechende Steuerung des Getriebes variiert werden kann, wie noch erläutert wird.

Der mechanische erste Zweig 5 ist an die Antriebswelle 3 durch eine Reversierschaltgruppe 16 zur Umkehrung der Drehrichtung angebunden. Die genannte Reversierschaltgruppe 16 umfasst ein Vorwärtsrad 30, das durch eine Vorwärtskupplung Kv an die Antriebswelle 3 ankuppelbar ist, so dass es sich zusammen mit der Antriebswelle 3 in derselben Richtung dreht. Zum anderen umfasst die Reversierschaltgruppe 16 ein Rückwärtsrad 31, das über eine Rückwärtskupplung Kr an ein Stirnrad 32 ankuppelbar ist, das mit der Antriebswelle 3 bzw. einem damit verbundenen Stirnrad in Stirneingriff steht und sich mit entgegengesetzter Drehrichtung wie die Antriebswelle 3 dreht. Die genannten Vorwärts- und Rückwärtsräder 30 und 31 stehen mit einem Eingangsrad 33 des mechanischen ersten Zweigs 5 in Eingriff, so dass je nachdem, welche der Vorwärts- und Rückwärtskupplungen Kv bzw. Kr in Eingriff steht, die Eingangswelle 34 des mechanischen Zweigs 5 vorwärts oder rückwärts dreht. Die Anordnung ist dabei derart getroffen, dass sich das Eingangsrad 33 bei Rückwärts- und Vorwärtsbetrieb bei jeweils gleicher Drehzahl der Antriebswelle 3 mit betragsmäßig gleicher oder nahezu gleicher Drehzahl dreht. Die Drehzahl des Eingangsrades 33 und damit der Eingangswelle 34 des Planetengetriebes muss dabei nicht zwangsweise betragsmäßig gleich der Drehzahl der Antriebswelle 3 sein, sondern kann gegenüber dieser betragsmäßig größer oder kleiner sein, je nach Ausbildung der zwischengeschalteten Zahnräder. Werden beide Vorwärts- und Rückwärtskupplungen Kv und Kr außer Eingriff gebracht, wird der mechanische erste Zweig 5 abgekuppelt. Insofern bildet die Reversierschaltgruppe 16 gleichzeitig eine Kupplungseinrichtung zum Ab- und Zuschalten des mechanischen ersten Zweigs 5.

Der mechanische erste Zweig 5 ist über eine Planetengetriebeanordnung 7 weitergeführt, die die genannte Eingangswelle 34 des ersten Zweigs 5 mit der Abtriebswelle 4 des Leistungsverzweigungsgetriebes 1 verbindet, vgl. Fig. 1.

Bei der in Fig. 1 gezeigten Ausführung ist die Planetengetriebeanordnung 7 als Stufenplanetengetriebe ausgebildet, welches einen Steg 19 umfasst, der mindestens einen Stufenplaneten 20 trägt, dessen erste Stufe 20a mit der ersten Sonne 18 der ersten Planetenstufe 17 in Wirkverbindung steht, während die zweite Stufe 20b des Stufenplaneten 20 mit einem Hohlrad 24 sowie einer zweiten Sonne 22 der zweiten Planetenstufe 21 in Wirkverbindung steht.

Damit besitzt die Planetengetriebeanordnung 7 vier Anschlussstellen bzw. Anschlüsse. Ein erstes Anschlusselement 8 wird von der ersten Sonne 18 gebildet und ist über die Eingangswelle 34, das Eingangsrad 33 und die Reversierschaltstufe 16 mit der Antriebswelle 3 verbunden. Ein zweites Anschlusselement 9 ist an dem Steg 19 vorgesehen, der mit der Abtriebswelle 4 verbunden ist. Ein drittes Anschlusselement 10 wird von der zweiten Sonne 22 gebildet und ist mit einem zweiten Energiewandler 13 in Form eines verstellbaren Hydrostaten verbunden. Ein viertes Anschlusselement 11 wird von dem Hohlrad 24 gebildet, an das ein dritter Energiewandler 14 in Form eines ebenfalls verstellbaren Hydrostaten angeschlossen ist, wobei dem genannten vierten Anschlusselement 11 und/oder dem genannten dritten Energiewandler 14 eine Bremse K1 zugeordnet ist, mittels derer das vierte Anschlusselement 11 und damit das Hohlrad 24 blockiert werden kann.

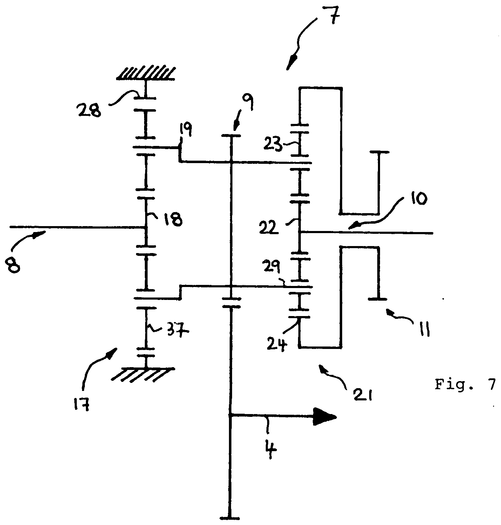

Alternativ zu der in Fig. 1 gezeigten Ausführung kann die Planetengetriebeanordnung 7 auch zwei herkömmlich ausgebildete, hintereinander geschaltete Planetenstufen 17 und 21 umfassen, wie dies Fig. 7 zeigt. Die erste Planetenradstufe 17 umfasst hierbei eine erste Sonne 18, einen ersten Steg 19, der zumindest einen Planeten trägt, sowie ein erstes Hohlrad 28. Die zweite Planetenstufe 21 umfasst analog eine zweite Sonne 22, einen zweiten Steg 29, der zumindest einen zweiten Planeten 23 trägt, sowie ein zweites Hohlrad 24. Wie Fig. 7 zeigt, sind die ersten und zweiten Stege 19 und 29 miteinander verbunden bzw. als ein Doppelsteg ausgeführt. Das Hohlrad 28 der ersten Stufe ist festgesetzt, wie Fig. 7 zeigt.

Wie Fig. 7 zeigt, kann auch hier die erste Sonne 18 das erste Anschlusselement 8 für die Anbindung der Antriebswelle 3 bilden. Das zweite Anschlusselement 9 kann von den miteinander verbundenen Stegen 19 und 29 gebildet werden und die Abtriebswelle 4 anbinden. Ähnlich der Ausführung nach Fig. 1 bildet die zweite Sonne 22 das dritte Anschlusselement 10 zur Anbindung des zweiten Energiewandlers 13, während das zweite Hohlrad 24 das vierte Anschlusselement 11 zur Anbindung des dritten Energiewandlers 14 bildet.

Neben den zwei schon erwähnten Energiewandlern 13 und 14, die an die Planetengetriebeanordnung 7 angebunden sind, umfasst der hydraulische zweite Zweig 6 des Getriebes noch einen weiteren Energiewandler 12, der nachfolgend als erster Energiewandler 12 bezeichnet wird und im Gegensatz zu den beiden anderen Energiewandlern 13 und 14 nicht an die Planetengetriebeanordnung 7, sondern an die Antriebswelle 3 angebunden ist, und zwar vor der Reversierschaltgruppe 16 bzw. derart, dass der erste Energiewandler 12, der ebenfalls als verstellbarer Hydrostat ausgebildet sein kann, sich unabhängig vom Schaltzustand der genannten Reversierschaltgruppe 16 mit der Antriebswelle 3 mitdreht, wobei in der in Fig. 1 gezeigten Ausführung die Anbindung über das Stirnrad 32 erfolgt, so dass der Hydrostat 12 in entgegengesetzter Richtung relativ zur Antriebswelle 3 dreht. Der erste Energiewandler 12 kann gegenüber der Antriebswelle 3 in der Drehzahl übersetzt oder auch untersetzt sein, so dass der Energiewandler 12 eine für diesen Energiewandler vorteilhafte, von der Drehzahl der Antriebswelle 3 unterschiedliche Drehzahl haben kann.

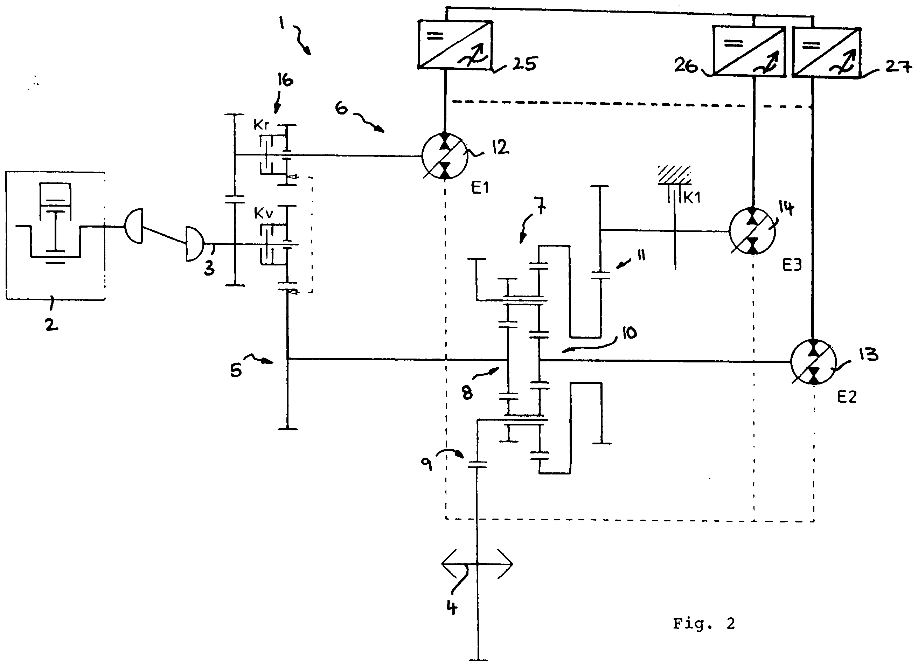

Während in der Ausführung gemäß Fig. 1 die Energiewandler 12, 13 und 14 als jeweils verstellbare Hydrostaten ausgebildet sind, können für den zweiten Zweig 6 auch andere Energiewandler verwendet werden, insbesondere Elektromaschinen, so dass der zweite Zweig 6 elektrisch ausgebildet ist. Wie Fig. 2 zeigt, können insbesondere in an sich entsprechender Weise drei elektrische Energiewandler an die Planetengetriebeanordnung 7 bzw. die Antriebswelle 3 angebunden werden, wobei vorteilhafterweise die genannten Energiewandler 12, 13 und 14 jeweils als Drehstrommaschine ausgeführt sein können, die über rückspeisefähige Wechselrichter 25, 26 und 27 mit einem gemeinsamen Gleichspannungszwischenkreis verbunden sein können, vgl. Fig. 2. Dementsprechend können durch Verstellung der genannten Wechselrichter die Elektromaschinen hinsichtlich ihrer Drehzahl verstellt werden und im motorischen Betrieb wahlweise als Motor bzw. Stromgenerator betrieben werden. Im Übrigen entspricht die Ausführung nach Fig. 2 der Ausführung nach Fig. 1, so dass auf deren Erläuterung Bezug genommen wird.

Mit dem Leistungsverzweigungsgetriebe 1 gemäß den Figuren können je nach benötigtem Drehmoment bzw. benötigter Drehzahl die Anteile der mechanisch übertragenen Leistung und hydraulisch/elektrisch übertragenen Leistung so abgestimmt werden, dass entweder sehr hohe Drehmomente bei gleichzeitig kleiner Drehzahl oder sehr kleine Drehmomente bei großen Drehzahlen abgegeben werden können, wobei beispielsweise der Radlader oder die Laderaupe von sehr kleinen bis sehr großen Fahrgeschwindigkeiten stufenlos fahren kann. Insbesondere kann eine unterbrechungsfreie Zugkraftübertragung auch beim Umschalten zwischen den verschiedenen Fahrbereichen erreicht werden. Durch die spezielle Ausbildung des Leistungsverzweigungsgetriebes kann der Wirkungsgrad erheblich verbessert werden, insbesondere bei höheren Fahrgeschwindigkeiten. Des Weiteren kann die Drehzahl des Antriebsmotors 2 abgesenkt werden, was eine weitere Kraftstoffeinsparung mit sich bringt.

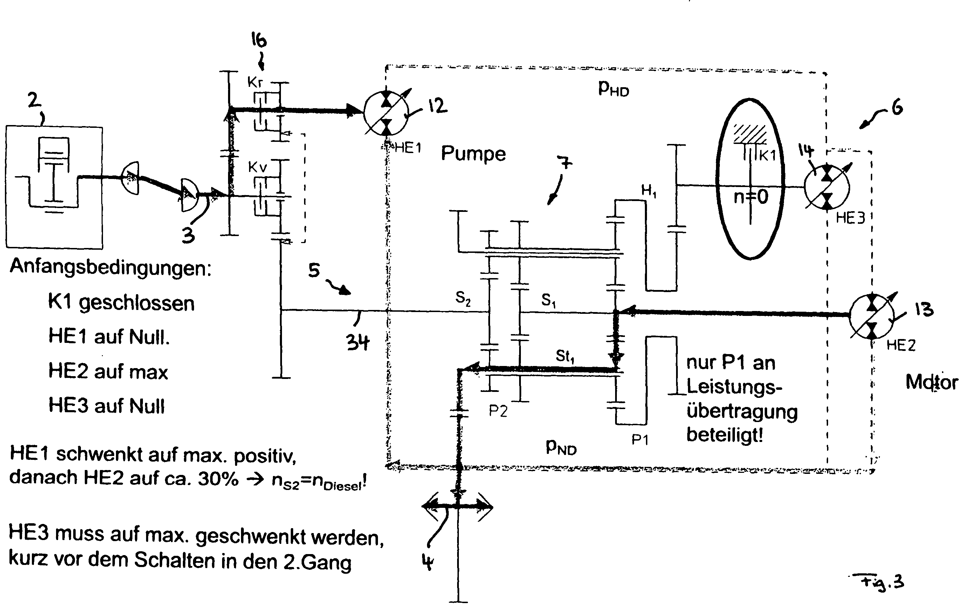

Insbesondere können mit dem Leistungsverzweigungsgetriebe 1 folgende Fahrstufen realisiert werden, die im Folgenden anhand der hydraulischen Variante für einen Fahrantrieb, beispielsweise einen Radlader oder eine Laderaupe erläutert werden:
Beim Anfahren wird üblicherweise eine hohe Zugkraft benötigt. Diese kann im vorliegenden Fall dadurch erzeugt werden, dass das Leistungsverzweigungsgetriebe 1 in einem ersten Fahrbereich rein hydrostatisch arbeitet, wie dies Fig. 3 zeigt. Hierzu wird der mechanische erste Zweig 5 des Getriebes abgeschaltet bzw. abgekuppelt, indem beide Kupplungen Kv und Kr der Reversierschaltgruppe 16 geöffnet werden. Dementsprechend arbeitet nur der hydrostatische zweite Zweig 6, wobei hier, wie Fig. 3 zeigt, der erste Hydrostat 12 als Pumpe arbeitet und von der Antriebswelle 3 her angetrieben wird. Im Ausgangszustand, d.h. im Stillstand ist hierbei zunächst durch die Steuervorrichtung 15 der erste Hydrostat 12 auf Schwenkwinkel Null gestellt, während der zweite Hydrostat 13 auf maximalen Schwenkwinkel gestellt sein kann, um als Motor mit maximalem Moment anfahren zu können. Ist wie bei der Ausführung nach den gezeigten Figuren eine Bremse vorgesehen, mittels derer das dem dritten Hydrostaten 14 zugeordnete Anschlusselement 11 blockiert werden kann, ist im Anfangszustand die genannte Bremse K1 geschlossen. Wie eingangs bereits erläutert, könnte das Stillsetzen des Hohlrads 24 jedoch auch über den genannten dritten Hydrostaten 14 erfolgen, wobei ein Blockieren mittels der Bremse K1 bevorzugt ist. Hierdurch kann der dritte Hydrostat 14 auf Null gestellt werden, so dass das Leistungsverzweigungsgetriebe mit nur zwei Hydrostaten arbeitet, nämlich dem ersten Hydrostaten 12 und dem zweiten Hydrostaten 13.

Um anzufahren wird der dabei als Pumpe arbeitende erste Hydrostat 12 von Null aus ausgeschwenkt, so dass er einen zunehmenden Volumenstrom bereitstellt, wobei vorteilhafterweise der genannte erste Hydrostat 12 bis auf seinen maximalen Schwenkwinkel gefahren werden kann, um die Geschwindigkeit zu erhöhen. Der durch den Volumenstrom erzeugte Hochdruck p_{HD} wird auf den als Motor arbeitenden zweiten Hydrostaten 13 gegeben, der nach dem ersten Anfahren oder wenn der erste Hydrostat 12 voll ausgeschwenkt ist, aus seiner maximal ausgeschwenkten Stellung in eine weniger weit ausgeschwenkte Stellung gefahren werden kann, beispielsweise auf ca. 30 % seines maximalen Schwenkwinkels. Diese Verstellung der Schwenkwinkel zieht eine von Null weg zunehmende Drehzahl des zweiten Hydrostaten 13 nach sich, die entsprechend zu einer Steigerung der Drehzahl am zweiten Sonnenrad 22 führt, was bei stehendem Hohlrad 24 zu einer entsprechenden Steigerung der Drehzahl des Steges 19 und damit ebenso zu einer Steigerung der Fahrgeschwindigkeit führt. Die Schwenkwinkel der beiden Hydrostaten 12 und 13 am Ende dieses Fahrbereiches sind so gewählt, dass dann die Drehzahl der Eingangswelle 34 des mechanischen ersten Zweigs 5 an die Drehzahl der Antriebswelle 3 so angepasst ist, dass an der Kupplung K_{V} keine oder nur noch eine geringe Drehzahldifferenz vorliegt. Wenn dieser Fahrzustand, der sogenannte Synchronpunkt, erreicht ist, kann vom rein hydraulischen Fahren auf leistungsverzweigtes Fahren umgeschalten werden.

Hierzu wird einerseits vorteilhafterweise der dritte Hydrostat 14 vollständig ausgeschwenkt, d.h. auf maximales Drehmomentvermögen gestellt, um nach Lösen der Bremse K1 das dort anstehende Drehmoment bzw. das Hohlrad 24 halten zu können. Kurz vorher oder kurz nachher oder gleichzeitig wird der mechanische erste Zweig 5 zugeschaltet, indem die Vorwärtskupplung Kv der Reversierschaltstufe 16 geschlossen wird. Damit ist die Drehzahl der ersten Sonne 18 im Weiteren direkt proportional zur Drehzahl der Antriebswelle 3 bzw. beispielsweise zu der des Dieselmotors 2.

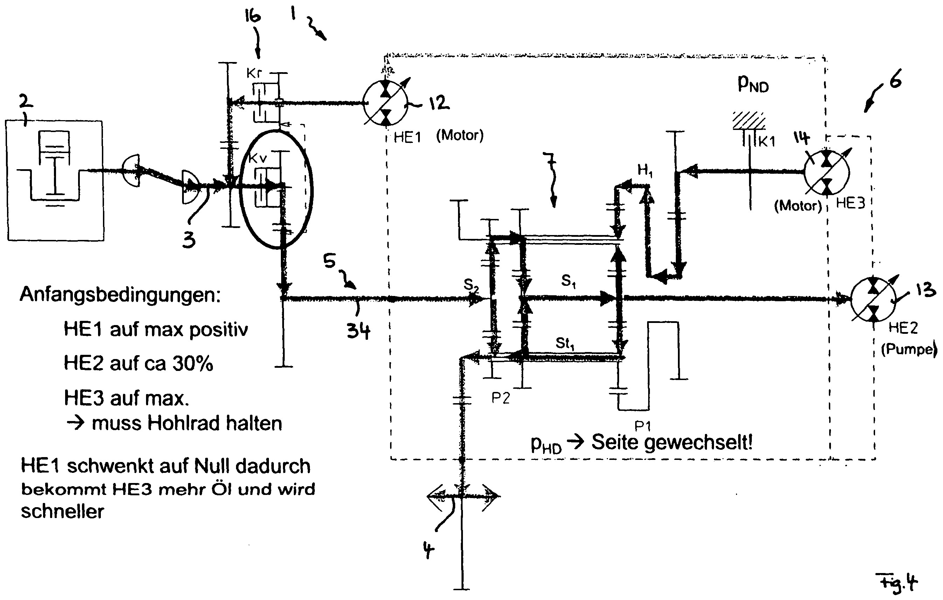

In einem ersten Unterbereich dieses leistungsverzweigten zweiten Fahrbereichs arbeitet sodann, wie dies Fig. 4 zeigt, im motorischen Fahrbetrieb der zweite Hydrostat 13 als Pumpe, während umgekehrt der erste Hydrostat 12 als Motor betrieben wird, vgl. Fig. 4. Vorteilhafterweise kann besagter erster Hydrostat 12 jedoch in Weiterbildung der Erfindung von der Steuervorrichtung 15 in seinem Schwenkwinkel reduziert werden, insbesondere auf Null gefahren werden. Hierdurch gelangt ein von Null aus zunehmender Teil des vom zweiten Hydrostaten 13 bereitgestellten hydraulischen Volumenstroms auf den dritten Hydrostaten 14, so dass dieser im motorischen Fahrbetrieb als Motor arbeitend von Null aus seine Drehzahl erhöht. Dies führt zu einer von Null weg ansteigenden Drehzahl des Hohlrads 24, die sich im Planetengetriebe zur Drehzahl des mechanischen Zweiges 5 an der ersten Sonne 18 aufaddiert und damit zu einer weiteren Steigerung der Drehzahl des Steges 19 und damit zu einer weiteren Steigerung der Drehzahl der Abtriebswelle 4 und somit zu einer weiteren Steigerung der Fahrgeschwindigkeit führt. Wenn der erste Hydrostat 12 auf Null geschwenkt ist, wird nur noch mit den zweiten und dritten Hydrostaten 13 und 14 gefahren, zusätzlich natürlich zu dem mechanischen ersten Zweig 5. In diesem Punkt beginnt der zweite Unterabschnitt des leistungsverzweigten zweiten Fahrbereichs.

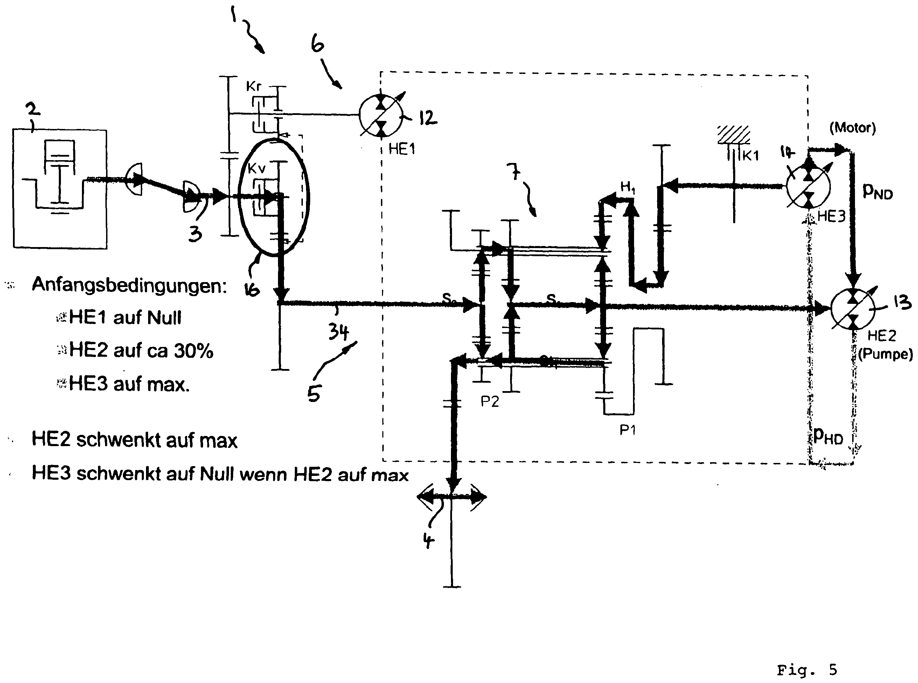

In diesem zweiten Unterabschnitt des leistungsverzweigten zweiten Fahrbereichs, den Fig. 5 zeigt, können sodann die genannten beiden zweiten und dritten Hydrostaten 13 und 14 hinsichtlich ihres Schwenkwinkels verstellt werden, um dementsprechend die Fahrgeschwindigkeit bzw. das übertragene Drehmoment zu variieren. Hierbei arbeiten im motorischen Fahrbetrieb weiterhin der zweite Hydrostat 13 als Pumpe und der dritte Hydrostat 14 als Motor. Der erste Hydrostat 12 wird in diesem Fahrbereich nur mitgeschleppt und läuft, da er auf Schwenkwinkel Null steht, leer, d.h. momentenfrei oder nahezu momentenfrei, mit. Um mit höherer Fahrgeschwindigkeit zu fahren, kann insbesondere der zweite Hydrostat 13 wieder weiter ausschwenken, insbesondere bis hin zur maximalen Hubvolumenstellung. Gleichzeitig oder zeitversetzt kann der dritte Hydrostat 14 in seinem Hubvolumen herabgefahren werden, insbesondere bis auf die Nullstellung herab. Dadurch wird die Drehzahl des Hydrostaten 14 weiter erhöht, was zu einer weiter ansteigenden Drehzahl des Hohlrads 24 und somit zu einer weiteren Steigerung der Fahrgeschwindigkeit und gleichzeitig rückwirkend zu einer abnehmenden Drehzahl der zweite Sonne 22 und damit des zweiten Hydrostaten 13 führt. Wenn die Nullstellung des dritten Hydrostaten 14 erreicht ist, ist die Drehzahl des zweiten Hydrostaten 13 gleich Null. In diesem Punkt beginnt der dritte Unterabschnitt des leistungsverzweigten zweiten Fahrbereichs.

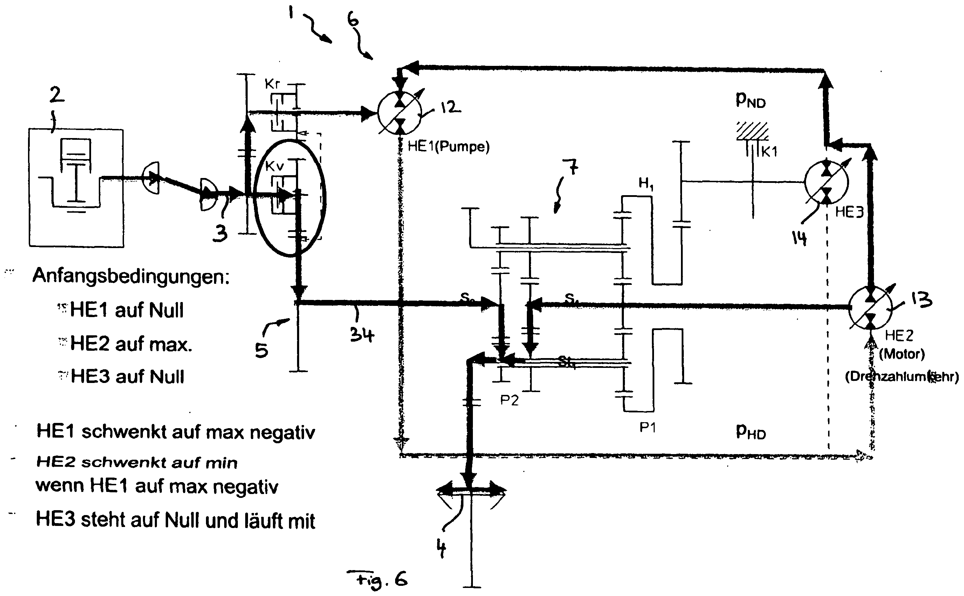

Um nun die Fahrgeschwindigkeit noch weiter zu steigern, kann in diesem dritten Unterbereich des leistungsverzweigten zweiten Fahrbereichs, wie dies Fig. 6 zeigt, der erste Hydrostat 12 nun von Null weg jetzt in die negative Richtung ausgeschwenkt werden. Hierdurch dreht sich der hydraulische Volumenstrom des im motorischen Fahrbetrieb jetzt wieder als Pumpe arbeitenden ersten Hydrostaten 12 um, so dass der zweite Hydrostat 13 nun auch in entgegengesetzte Richtung zu drehen beginnt und im motorischen Fahrbetrieb vom Pumpen- wieder in den Motorbetrieb wechselt. Eine negative Antriebsdrehzahl am zweiten Sonnenrad 22 führt zu einer weiteren Steigerung der Drehzahl des Steges 19 und somit zu einer weiteren Steigerung der Fahrgeschwindigkeit. Der dritte Hydrostat 14 wird in diesem Fahrbereich nur mitgeschleppt und läuft, da er auf Schwenkwinkel Null steht, leer, d.h. momentenfrei oder nahezu momentenfrei, mit. Ist nun der erste Hydrostat 12 maximal in negative Richtung ausgeschwenkt, wird, um weiter an Fahrgeschwindigkeit zu gewinnen, der im motorischen Fahrbetrieb als Motor arbeitende zweite Hydrostat 13 wieder zurückgeschwenkt, bis die maximale Fahrgeschwindigkeit erreicht ist. Auch hier kann die Verstellung des ersten und zweiten Hydrostaten 12 bzw. 13 auch zeitgleich oder zeitüberlappend erfolgen.

Um mit dem Leistungsverzweigungsgetriebe 1 auch rückwärts fahren zu können, kann in an sich bekannter Weise zunächst im rein hydrostatischen Betrieb der beim Anfahren als Pumpe arbeitende erste Hydrostat 12 kontinuierlich von Null weg oder durch Null hindurch in die negative Richtung verstellt werden, so dass hier wie bei rein hydrostatischen Getrieben ein sanftes, kontinuierliches und doch rasches Reversieren möglich ist. Um auch für das Rückwärtsfahren die zuvor erläuterten mehreren Fahrbereiche zu haben, insbesondere auch das leistungsverzweigte Fahren nutzen zu können, wird für das Rückwärtsfahren im leistungsverzweigten Bereich durch die Reversierschaltgruppe 16 die Eingangswelle 34 des mechanischen ersten Zweigs 5 in umgekehrter Richtung angetrieben, indem, sobald die Drehzahl der Eingangswelle 34 des mechanischen ersten Zweigs 5 an die Drehzahl der Antriebswelle 3 so angepasst ist, dass an der Kupplung Kr keine oder nur noch eine geringe Drehzahldifferenz vorliegt, die Rückwärtskupplung Kr geschlossen wird. Dementsprechend dreht sich die Eingangswelle 34 zwar betragsmäßig betrachtet wiederum entsprechend der Antriebsdrehzahl der Antriebswelle 3, jedoch mit negativem Vorzeichen. Die verschiedenen leistungsverzweigten Fahrstufen ergeben sich dann analog wie zuvor beschrieben.

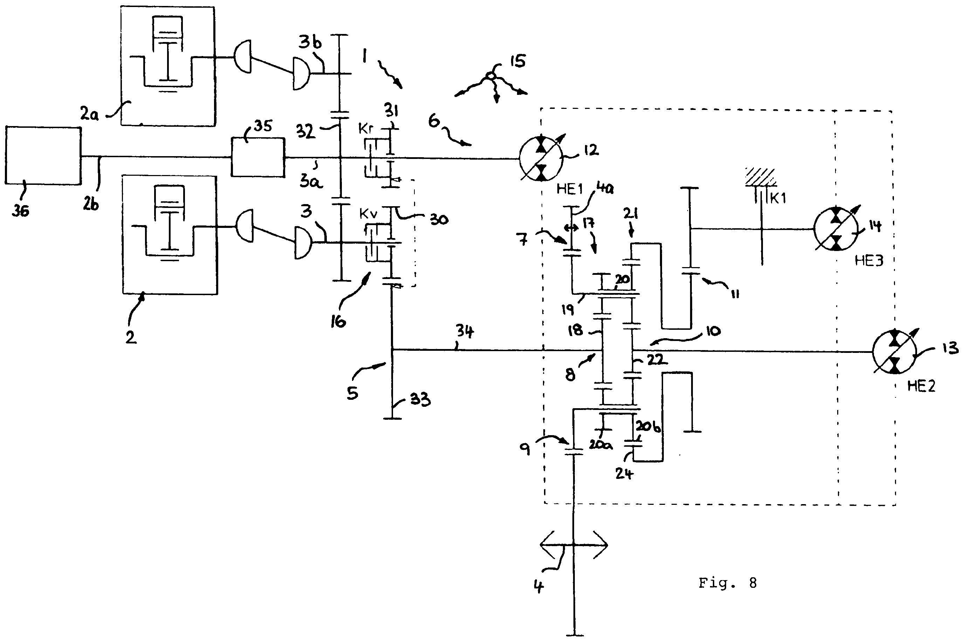

Wie Fig. 8 zeigt, kann das Leistungsverzweigungsgetriebe 1 auch mehr als drei Energiewandler aufweisen. Bei der in Fig. 8 gezeigten Ausführung ist dabei ein vierter Energiewandler 35 mit der Antriebswelle 3 verbindbar. Der genannte vierte Energiewandler 35 kann unabhängig von der Ausbildung der übrigen Energiewandler 12, 13 und 14 hydrostatisch oder elektrisch ausgebildet sein, wobei bei der in Fig. 8 gezeichneten Ausführung eine Elektromaschine beispielsweise in Form einer Drehstrommaschine vorgesehen ist.

Über den zusätzlichen vierten Energiewandler 35 kann im Sinne einer Boost-Funktion bei auftretenden Leistungsbedarfsspitzen oder beispielsweise beim Anfahren zusätzliches Drehmoment auf die Antriebswelle 3 gegeben werden. Der Energiewandler 35 kann hierbei von verschiedener Seite her mit Energie versorgt werden, wobei gemäß Fig. 8 in vorteilhafter Weiterbildung der Erfindung ein elektrischer Energiespeicher 36 vorgesehen ist, aus dem der vierte Energiewandler 35 gespeist werden kann. Vorteilhafterweise kann im Schubbetrieb der vierte Energiewandler 35 als Generator arbeiten und Strom in den besagten Energiespeicher 36 einspeisen. Wenn der vierte Energiewandler 35 als Hydrostat ausgebildet ist, kann der Energiespeicher 36 ein Druckspeicher sein.

Weiterhin zeigt Fig. 8, dass das Leistungsverzweigungsgetriebe 1 von mehr als einem Antriebsmotor angetrieben werden kann. Zusätzlich zu dem Antriebsmotor 2 aus den vorhergehenden Ausführungsformen ist hierbei ein zweiter Antriebsmotor 2a vorgesehen, der, wie Fig. 8 zeigt, auf das Stirnrad 32 geschaltet ist. Der besagte Antriebsmotor 2a kann ebenfalls ein Dieselmotor sein, kann jedoch auch anders ausgebildet sein.

Ferner zeigt Fig. 8, dass das Leistungsverzweigungsgetriebe 1 auch mehr als eine Abtriebswelle besitzen kann. Vorteilhafterweise kann an dem Steg 19 des Planetengetriebes zumindest ein zusätzliches Abtriebsrad 4a angreifen.

Im Übrigen entspricht die Ausbildung der Ausführung nach Fig. 8 im Wesentlichen der Ausführung gemäß Fig. 1, so dass diesbezüglich auf die vorangehende Beschreibung, auch auf die Beschreibung der Funktion und Betriebszustände anhand der Figuren 3 bis 6, verwiesen wird.

## Patentansprüche

1. Leistungsverzweigungsgetriebe mit einer Antriebswelle (3) und einer Abtriebswelle (4), zwischen denen ein mechanischer erster Zweig (5) und ein hydraulischer oder elektrischer zweiter Zweig (6) vorgesehen sind, die zumindest teilweise durch eine Planetengetriebeanordnung (7) miteinander verbindbar sind, wobei die Planetengetriebeanordnung (7) mehrere Anschlusselemente (8, 9, 10, 11) und der zweite Zweig (6) zumindest drei miteinander hydraulisch oder elektrisch verbundene rotatorische Energiewandler (12, 13, 14) umfasst, wobei die Antriebswelle (3) mit einem ersten Energiewandler (12) verbunden und einem ersten Anschlusselement (8) der Planetengetriebeanordnung (7) verbindbar ist, die Abtriebswelle (4) mit einem zweiten Anschlusselement (9) der Planetengetriebeanordnung (7) verbunden ist, der zweite Energiewandler (13) mit einem dritten Anschlusselement (10) der Planetengetriebeanordnung (7) verbunden ist, **dadurch gekennzeichnet, dass** der dritte Energiewandler (14) mit einem vierten Anschlusselement (11) der Planetengetriebeanordnung (7) verbunden ist.

2. Leistungsverzweigungsgetriebe nach dem vorhergehenden Anspruch, wobei der dritte (14) Energiewandler mit einem Anschlusselement der Planetengetriebeanordnung (7) verbunden ist, dem eine Bremse (K1) zum Abbremsen oder Festhalten des genannten Anschlusselements zugeordnet ist.

3. Leistungsverzweigungsgetriebe nach einem der vorhergehenden Ansprüche, wobei eine Steuervorrichtung (15) zur Steuerung des Betriebszustands der Energiewandler und/oder des Getriebeschaltzustands vorgesehen und derart ausgebildet ist, dass im motorischen Betrieb je nach gewünschter Abtriebsdrehzahl und/oder gewünschtem Abtriebsmoment jeweils zumindest ein anderer Energiewandler (12, 13, 14) als hydraulischer/elektrischer Generator betreibbar ist und/oder im Schubbetrieb je nach gewünschter Abtriebsdrehzahl und/oder gewünschtem Abtriebsmoment jeweils zumindest ein anderer Energiewandler (12, 13, 14) als Motor betreibbar ist.

4. Leistungsverzweigungsgetriebe nach dem vorhergehenden Anspruch, wobei die Steuervorrichtung (15) derart ausgebildet ist, dass im motorischen Betrieb der erste Energiewandler (12) und zumindest einer der zweiten und dritten Energiewandler (13, 14) je nach gewünschter Abtriebsgeschwindigkeit wechselweise als hydraulischer/elektrischer Generator betreibbar sind, und/oder derart ausgebildet ist, dass im motorischen Betrieb von den zweiten und dritten Energiewandlern (13, 14) stets höchstens einer als hydraulischer/elektrischer Generator betrieben wird.

5. Leistungsverzweigungsgetriebe nach einem der vorhergehenden Ansprüche, wobei der erste Zweig (5) von der Antriebswelle (3) durch zumindest eine Kupplung (Kr, Kv) abkuppelbar ist und in einem ersten Fahrbereich die Abtriebswelle (4) ausschließlich vom zweiten Zweig (6) antreibbar ist, wobei in dem genannten ersten Fahrbereich im motorischen Betrieb der erste Energiewandler (12) als hydraulischer/elektrischer Generator und zumindest einer der zweiten und dritten Energiewandler (13, 14) als Motor betreibbar ist.

6. Leistungsverzweigungsgetriebe nach einem der vorhergehenden Ansprüche, wobei in einem zweiten Fahrbereich, in dem die Abtriebswelle (4) sowohl vom ersten Zweig (5) als auch vom zweiten Zweig (6) angetrieben wird, der erste Energiewandler (12) und der zweite Energiewandler (13) von der Steuervorrichtung (15) jeweils wahlweise sowohl als Motor als auch als hydraulischer/elektrischer Generator betreibbar sind, vorzugsweise derart, dass bei Betreiben des ersten Energiewandlers (12) als Motor der zweite Energiewandler (13) als hydraulischer/elektrischer Generator betrieben wird und bei Betreiben des ersten Energiewandlers (12) als hydraulischer/elektrischer Generator der zweite Energiewandler (13) als Motor betrieben wird.

7. Leistungsverzweigungsgetriebe nach dem vorhergehenden Anspruch, wobei die Steuervorrichtung (15) derart ausgebildet ist, dass in einem ersten Unterbereich des genannten zweiten Fahrbereichs im motorischen Betrieb der zweite Energiewandler (13) als hydraulischer/elektrischer Generator betrieben wird, der dritte Energiewandler (14) als Motor betrieben wird und der erste Energiewandler (12) als Motor betrieben und/oder drehmomentenfrei geschaltet wird, und/oder in einem zweiten Unterbereich des genannten zweiten Fahrbereichs im motorischen Betrieb der zweite Energiewandler (13) als hydraulischer/elektrischer Generator betrieben wird, der dritte Energiewandler (14) als Motor betrieben wird und der erste Energiewandler (12) drehmomentenfrei geschaltet ist, und/oder in einem dritten Unterbereich des genannten zweiten Fahrbereichs im motorischen Betrieb der erste Energiewandler (12) als hydraulischer/elektrischer Generator betrieben wird, der zweite Energiewandler (13) als Motor betrieben wird und der dritte Energiewandler (14) drehmomentenfrei geschaltet ist.

8. Leistungsverzweigungsgetriebe nach einem der vorhergehenden Ansprüche, wobei zwischen der Antriebswelle (3) und der Planetengetriebeanordnung (7) eine Reversierschaltgruppe (16) zur Umkehrung der Drehrichtung des ersten Anschlusselements (8) der Planetengetriebeanordnung (7) relativ zur Antriebswelle (3) vorgesehen ist, wobei vorzugsweise die Reversierschaltgruppe (16) die mindestens eine Kupplung (Kr, Kv) zum Abkuppeln des mechanischen ersten Zweigs (5) von der Antriebswelle (3) aufweist, wobei vorzugsweise der erste Energiewandler (12) mit der Antriebswelle (3) derart verbindbar ist, dass der Energiewandler (12) mit der Antriebswelle (3) ungeachtet der Stellung der Reversierschaltgruppe (16) in einer festen Drehrichtung antreibbar ist.

9. Leistungsverzweigungsgetriebe nach einem der vorhergehenden Ansprüche, wobei die Planetengetriebeanordnung (7) als Stufenplanetengetriebe ausgebildet ist und einen Steg (19) mit mindestens einem Stufenplaneten (20) und eine erste Sonne (18), die in Wirkverbindung mit der ersten Stufe (20a) des mindestens einen Stufenplaneten (20) steht, und eine zweite Sonne (22), die in Wirkverbindung mit der zweiten Stufe (20b) des mindestens einen Stufenplaneten (20) steht, und ein Hohlrad (24), welches in Wirkverbindung mit mindestens einer Stufe des mindestens einen Stufenplaneten (20) steht, aufweist.

10. Leistungsverzweigungsgetriebe nach einem der Ansprüche 1-8, wobei die Planetengetriebeanordnung (7) mehrstufig ausgebildet ist, wobei vorzugsweise eine erste Planetenstufe (17) eine erste Sonne (18), einen ersten Steg (19) mit zumindest einem ersten Planeten (37) und ein erstes Hohlrad (28) umfasst und eine zweite Planetenstufe (21) eine zweite Sonne (22), einen zweiten Steg (29) mit zumindest einem zweiten Planeten (23) und ein zweites Hohlrad (24) umfasst, wobei vorzugsweise ein Anschluss der ersten Planetenstufe (17) mit einem Anschluss der zweiten Planetenstufe (21) gekoppelt ist und ein Planetengetriebeelement festgesetzt ist, so dass die Planetengetriebeanordnung vier Anschlüsse hat.

11. Leistungsverzweigungsgetriebe nach einem der beiden vorhergehenden Ansprüche, wobei
- die Antriebswelle (3) mit der ersten Sonne (18) der Planetengetriebeanordnung (7) verbindbar ist, und/oder
- der zweite Energiewandler (13) mit der zweiten Sonne (22) und/oder der dritte Energiewandler (14) mit dem oder dem zweiten Hohlrad (24) der Planetengetriebeanordnung (7) verbindbar sind, und/oder
- die Abtriebswelle (4) mit dem Steg (19) oder dem ersten oder zweiten Steg (19; 29) der Planetengetriebeanordnung (7) verbindbar ist.

12. Leistungsverzweigungsgetriebe nach einem der vorhergehenden Ansprüche, wobei zumindest zwei der drei Energiewandler (12, 13, 14) hydraulisch oder elektrisch parallel zueinander geschaltet oder schaltbar sind.

13. Leistungsverzweigungsgetriebe nach einem der vorhergehenden Ansprüche, wobei mindestens zwei der drei Energiewandler (12, 13, 14) als verstellbare Hydrostaten ausgebildet sind.

14. Leistungsverzweigungsgetriebe nach einem der Ansprüche 1-12, wobei mindestens zwei der drei Energiewandler (12, 13, 14) als Drehstrommaschinen ausgeführt sind und über rückspeisefähige Wechselrichter (25, 26, 27) mit einem gemeinsamen Gleichspannungszwischenkreis verbindbar sind.

15. Leistungsverzweigungsgetriebe nach einem der vorhergehenden Ansprüche, wobei ein vierter Energiewandler (35) vorgesehen ist, der vorzugsweise mit der zumindest einen Antriebswelle (3) verbindbar ist.

## Claims

1. A power split transmission having a drive shaft (3) and an output shaft (4) between which a mechanical first branch (5) and a hydraulic or electric second branch (6) are provided, which can be connected to one another at least in part by a planetary gear arrangement (7), wherein the planetary gear arrangement (7) comprises a plurality of connection elements (8, 9, 10, 11) and the second branch (6) comprises at least three rotary energy converters (12, 13, 14) which are connected to one another hydraulically or electrically, wherein the drive shaft (3) is connected to a first energy converter (12) and can be connected to a first connection element (8) of the planetary gear arrangement (7), the output shaft (4) is connected to a second connection element (9) of the planetary gear arrangement (7), the second energy converter (13) is connected to a third connection element (10) of the planetary gear arrangement (7), **characterized in that** the third energy converter (14) is connected to a fourth connection element (11) of the planetary gear arrangement (7).

2. A power split transmission in accordance with the preceding claim, wherein the third energy converter (14) is connected to a connection element of the planetary gear arrangement (7) with which a brake (K1) is associated for braking or holding the named connection element.

3. A power split transmission in accordance with one of the preceding claims, wherein a control apparatus (15) is provided and configured for controlling the operating state of the energy converters and/or of the transmission shift state such that, in motor operation and in dependence on the desired output speed and/or on the desired output torque, at least one respective other energy converter (12, 13, 14) can be operated as a hydraulic/electric generator and/or, in coasting mode and in dependence on the desired output speed and/or on the desired output torque, at least one respective other energy converter (12, 13, 14) can be operated as a motor.

4. A power split transmission in accordance with the preceding claim, wherein the control apparatus (15) is configured such that, in motor operation, the first energy converter (12) and at least one of the second and third energy converters (13, 14) can alternately be operated as a hydraulic/electric generator in dependence on the desired output speed, and/or is configured such that, in motor operation, always at most one of the second and third energy converters (13, 14) is operated as a hydraulic/electric generator.

5. A power split transmission in accordance with one of the preceding claims, wherein the first branch (5) can be decoupled from the drive shaft (3) by at least one clutch (Kr, Kv) and the output shaft (4) can be driven only by the second branch (6) in a first travel range, with, in the named first travel range in motor operation, the first energy converter (12) being able to be operated as a hydraulic/electric generator and at least one of the second and third energy converters (13, 14) being able to be operated as a motor.

6. A power split transmission in accordance with one of the preceding claims, wherein the first energy converter (12) and the second energy converter (13) can each selectively be operated by the control apparatus (15) both as a motor and as a hydraulic/electric generator in a second travel range in which the output shaft (4) is driven both by the first branch (5) and by the second branch (6), preferably such that, on operation of the first energy converter (12) as a motor, the second energy converter (13) is operated as a hydraulic/electric generator and, on operation of the first energy converter (12) as a hydraulic/electric generator, the second energy converter (13) is operated as a motor.

7. A power split transmission in accordance with the preceding claim, wherein the control apparatus (15) is configured such that, in a first sub-range of the named second travel range in motor operation, the second energy converter (13) is operated as a hydraulic/electric generator, the third energy converter (14) is operated as a motor and the first energy converter (12) is operated as a motor and/or is switched free of torque and/or, in a second sub-range of the named second travel range in motor operation, the second energy converter (13) is operated as a hydraulic/electric generator, the third energy converter (14) is operated as a motor and the first energy converter (12) is switched free of torque and/or, in a third sub-range of the named second travel range in motor operation, the first energy converter (12) is operated as a hydraulic/electric generator, the second energy converter (13) is operated as a motor and the third energy converter (14) is switched free of torque.

8. A power split transmission in accordance with one of the preceding claims, wherein a reversing shift group (16) for reversing the direction of rotation of the first connection element (8) of the planetary gear arrangement (7) relative to the drive shaft (3) is provided between the drive shaft (3) and the planetary gear arrangement (7), wherein the reversing shift group (16) preferably comprises the at least one clutch (Kr, Kr) for decoupling the mechanical first branch (5) from the drive shaft (3), wherein preferably the first energy converter (12) can be connected to the drive shaft (3) such that the energy converter (12) can be driven with the drive shaft (3) in a fixed direction of rotation irrespective of the position of the reversing shift group (16).

9. A power split transmission in accordance with one of the preceding claims, wherein the planetary gear arrangement (7) is configured as a staged planetary gear and comprises a web (19) having at least one staged planet (20) and comprises a first sun (18) which is in operational connection with the first stage (20a) of the at least one staged planet (20) and comprises a second sun (22) which is in operational connection with the second stage (20b) of the at least one staged plane (20) and comprises an annulus gear (24) which is in operational connection with at least one stage of the at least one staged plane (20).

10. A power split transmission in accordance with one of the claims 1 to 8, wherein the planetary gear arrangement (7) is configured as multistage, wherein preferably a first planet stage (17) comprises a first sun (18), a first web (19) having at least one first planet (37), and a first annulus gear (28), and a second planetary stage (21) comprises a second sun (22), a second web (29) having at least one second planet (23), and a second annulus gear (24), wherein a connection of the first planet stage (17) preferably is coupled to a connection of the second planet stage (21) and a planetary gear element is fixed so that the planetary gear arrangement has four connections.

11. A power split transmission in accordance with one of the two preceding claims, wherein
- the drive shaft (3) can be connected to the first sun (18) of the planetary gear arrangement (7), and/or
- the second energy converter (13) can be connected to the second sun (22) and/or the third energy converter (14) can be connected to the or to the second annulus gear (24) of the planetary gear arrangement (7), and/or
- the output shaft (4) can be connected to the web (19) or to the first or second web (19, 29) of the planetary gear arrangement (7).

12. A power split transmission in accordance with one of the preceding claims, wherein at least two of the three energy converters (12, 13, 14) are connected or connectable hydraulically or electrically or in parallel with one another.

13. A power split transmission in accordance with one of the preceding claims, wherein at least two of the three energy converters (12, 13, 14) are configured as adjustable hydrostats.

14. A power split transmission in accordance with one of the claims 1 - 12, wherein at least two of the three energy converters (12, 13, 14) are designed as three-phase machines and can be connected to a common DC voltage intermediate circuit via feedback-capable inverters (25, 26, 27).

15. A power split transmission in accordance with one of the preceding claims, wherein a fourth energy converter (35) is provided which can preferably be connected to the at least one drive shaft (3).

## Revendications

1. Transmission à dérivation de puissance avec un arbre d'entraînement (3) et un arbre de sortie (4), entre lesquels un premier embranchement mécanique (5) et un deuxième embranchement hydraulique ou électrique (6) sont prévus, qui peuvent être reliés entre eux au moins en partie par un ensemble formant engrenage planétaire (7), dans laquelle l'ensemble formant engrenage planétaire (7) comprend plusieurs éléments de raccordement (8, 9, 10, 11) et le deuxième embranchement (6) comprend au moins trois convertisseurs d'énergie (12, 13, 14) rotatifs reliés entre eux de manière hydraulique ou électrique, dans laquelle l'arbre d'entraînement (3) est relié à un premier convertisseur d'énergie (12) et peut être relié à un premier élément de raccordement (8) de l'ensemble formant engrenage planétaire (7), l'arbre de sortie (4) est relié à un deuxième élément de raccordement (9) de l'ensemble formant engrenage planétaire (7), le deuxième convertisseur d'énergie (13) est relié à un troisième élément de raccordement (10) de l'ensemble formant engrenage planétaire (7),
**caractérisée en ce**
**que** le troisième convertisseur d'énergie (14) est relié à un quatrième élément de raccordement (11) de l'ensemble formant engrenage planétaire (7).

2. Transmission à dérivation de puissance selon la revendication précédente, dans laquelle le troisième convertisseur d'énergie (14) est relié à un élément de raccordement de l'ensemble formant engrenage planétaire (7), auquel est associé un frein (K1) servant à ralentir ou à immobiliser ledit élément de raccordement.

3. Transmission à dérivation de puissance selon l'une quelconque des revendications précédentes, dans laquelle un dispositif de commande (15) est prévu pour commander l'état de fonctionnement des convertisseurs d'énergie et/ou de l'état de commutation de transmission et est réalisé de telle manière que lors du mode de fonctionnement motorisé, selon la vitesse de rotation de sortie souhaitée et/ou selon le couple de sortie souhaité, respectivement au moins un autre convertisseur d'énergie (12, 13, 14) peut fonctionner en tant que générateur hydraulique/électrique et/ou lors du mode de fonctionnement de poussée, selon une vitesse de rotation de sortie souhaitée et/ou selon un couple de sortie souhaité, respectivement au moins un autre convertisseur d'énergie (12, 13, 14) peut fonctionner en tant que moteur.

4. Transmission à dérivation de puissance selon la revendication précédente, dans laquelle le dispositif de commande (15) est réalisé de telle manière que lors du mode de fonctionnement motorisé, le premier convertisseur d'énergie (12) et au moins un parmi le deuxième et le deuxième convertisseurs d'énergie (13, 14) peuvent fonctionner, selon une vitesse de sortie souhaitée, en alternance en tant que générateur hydraulique/électrique, et/ou est réalisé de telle manière que lors du mode de fonctionnement motorisé, parmi les deuxième et troisième convertisseurs d'énergie (13, 14), systématiquement au maximum l'un d'eux fonctionne en tant que générateur hydraulique/électrique.

5. Transmission à dérivation de puissance selon l'une quelconque des revendications précédentes, dans laquelle le premier embranchement (5) peut être découplé de l'arbre d'entraînement (3) par au moins un couplage (Kr, Kv), et l'arbre de sortie (4) peut être entraîné exclusivement par le deuxième embranchement (6) dans une première zone de déplacement, dans laquelle dans ladite première zone de déplacement, lors du mode de fonctionnement motorisé, le premier convertisseur d'énergie (12) peut fonctionner en tant que générateur hydraulique/électrique et au moins un parmi les deuxième et troisième convertisseurs d'énergie (13, 14) peut fonctionner en tant que moteur.

6. Transmission à dérivation de puissance selon l'une quelconque des revendications précédentes, dans laquelle dans une deuxième zone de déplacement, dans laquelle l'arbre de sortie (4) est entraîné à la fois par le premier embranchement (5) et par le deuxième embranchement (6), le premier convertisseur d'énergie (12) et le deuxième convertisseur d'énergie (13) du dispositif de commande (15) peuvent fonctionner respectivement au choix à la fois en tant que moteur et en tant que générateur hydraulique/électrique, de préférence de telle manière que lors du fonctionnement du premier convertisseur d'énergie (12) en tant que moteur, le deuxième convertisseur d'énergie (13) fonctionne en tant que générateur hydraulique/électrique et lors du fonctionnement du premier convertisseur électrique (12) en tant que générateur hydraulique/électrique, le deuxième convertisseur d'énergie (13) fonctionne en tant que moteur.

7. Transmission à dérivation de puissance selon la revendication précédente, dans laquelle le dispositif de commande (15) est réalisé de telle manière que dans une première sous-zone de ladite deuxième zone de déplacement lors du mode de fonctionnement motorisé, le deuxième convertisseur d'énergie (13) fonctionne en tant que générateur hydraulique/électrique, le troisième convertisseur d'énergie (14) fonctionne en tant que moteur et le premier convertisseur d'énergie (12) fonctionne en tant que moteur et/ou est commuté sans couple de rotation, et/ou dans une deuxième sous-zone de ladite deuxième zone de déplacement, lors du mode de fonctionnement motorisé, le deuxième convertisseur d'énergie (13) fonctionne en tant que générateur hydraulique/électrique, le troisième convertisseur d'énergie (14) fonctionne en tant que moteur et le premier convertisseur d'énergie (12) est commuté sans couple de rotation, et/ou dans une troisième sous-zone de ladite deuxième zone de déplacement, lors du mode de fonctionnement motorisé, le premier convertisseur d'énergie (12) fonctionne en tant que générateur hydraulique/électrique, le deuxième convertisseur d'énergie (13) fonctionne en tant que moteur et le troisième convertisseur d'énergie (14) est commuté sans couple de rotation.

8. Transmission à dérivation de puissance selon l'une quelconque des revendications précédentes, dans laquelle un groupe de commutation réversible (16) servant à inverser le sens de rotation du premier élément de raccordement (8) de l'ensemble formant engrenage planétaire (7) par rapport à l'arbre d'entraînement (3) est prévu entre l'arbre d'entraînement (3) et l'ensemble formant engrenage planétaire (7), dans laquelle de préférence le groupe de commutation réversible (16) présente l'au moins un couplage (Kr, Kv) servant à découpler le premier embranchement (5) mécanique de l'arbre d'entraînement (3), dans laquelle de préférence le premier convertisseur d'énergie (12) peut être relié de telle manière à l'arbre d'entraînement (3) que le convertisseur d'énergie (12) peut être entraîné avec l'arbre d'entraînement (3) nonobstant la position du groupe de commutation réversible (16) dans un premier sens de rotation fixe.

9. Transmission à dérivation de puissance selon l'une quelconque des revendications précédentes, dans laquelle l'ensemble formant engrenage planétaire (7) est réalisé sous la forme d'un engrenage planétaire étagé et présente une entretoise (19) avec au moins un satellite étagé (20) et une première roue solaire (18), qui se trouve en liaison fonctionnelle avec le premier étage (20a) de l'au moins un satellite étagé (20), et une deuxième roue solaire (22), qui se trouve en liaison fonctionnelle avec le deuxième étage (20b) de l'au moins un satellite étagé (20), et une couronne (24), qui se trouve en liaison fonctionnelle avec au moins un étage de l'au moins un satellite étagé (20).

10. Transmission à dérivation de puissance selon l'une quelconque des revendications 1 - 8, dans laquelle l'ensemble formant engrenage planétaire (7) est réalisé de manière multi-étagée, dans laquelle de préférence un premier étage planétaire (17) comprend une première roue solaire (18), une première entretoise (19) avec au moins un premier satellite (37) et une première couronne (28) et un deuxième étage de satellite (21) comprend une deuxième roue solaire (22), une deuxième entretoise (29) avec au moins un deuxième satellite (23) et une deuxième couronne (24), dans laquelle de préférence un raccordement du premier étage de satellite (17) est couplé à un raccordement du deuxième étage planétaire (21) et un élément d'engrenage planétaire est fixé de sorte que l'ensemble formant engrenage planétaire a quatre raccordements.

11. Transmission à dérivation de puissance selon l'une quelconque des deux revendications précédentes, dans laquelle
- l'arbre d'entraînement (3) peut être relié à la première roue solaire (18) de l'ensemble formant engrenage planétaire (7), et/ou
- le deuxième convertisseur d'énergie (13) peut être relié à la deuxième roue solaire (22) et/ou le troisième convertisseur d'énergie (14) peut être relié à la couronne ou à la deuxième couronne (24) de l'ensemble formant engrenage planétaire (7), et/ou
- l'arbre de sortie (4) peut être relié à l'entretoise (19) ou à la première ou la deuxième entretoise (19 ; 29) de l'ensemble formant engrenage planétaire (7).

12. Transmission à dérivation de puissance selon l'une quelconque des revendications précédentes, dans laquelle au moins deux des trois convertisseurs d'énergie (12, 13, 14) sont commutés ou peuvent être commutés en parallèle les uns par rapport aux autres de manière hydraulique ou électrique.

13. Transmission à dérivation de puissance selon l'une quelconque des revendications précédentes, dans laquelle au moins deux des trois convertisseurs d'énergie (12, 13, 14) sont réalisés sous la forme d'hydrostats ajustables.

14. Transmission à dérivation de puissance selon l'une quelconque des revendications 1 - 12, dans laquelle au moins deux des trois convertisseurs d'énergie (12, 13, 14) sont réalisés sous la forme de machines à courant triphasé et peuvent être reliés à un circuit intermédiaire à tension continue commun par l'intermédiaire d'onduleurs (25, 26, 27) régénérateurs.

15. Transmission à dérivation de puissance selon l'une quelconque des revendications précédentes, dans laquelle un quatrième convertisseur d'énergie (35) est prévu, qui peut être relié de préférence à l'au moins un arbre d'entraînement (3).
